## Europäisches Patentamt
## European Patent Office
## Office européen des brevets

(19)

(11) Publication number: **0 009 160 B1**

## EUROPEAN PATENT SPECIFICATION

(12)

(45) Date of publication of patent specification: **07.03.84**

(51) Int. Cl.³: **C 08 F 10/00, C 08 F 4/64**

(21) Application number: **79103250.1**

(22) Date of filing: **03.09.79**

(54) **High efficiency catalyst for polymerizing olefins, and the use thereof.**

(30) Priority: **05.09.78 US 939639**
**05.09.78 US 939638**

(43) Date of publication of application:
**02.04.80 Bulletin 80/7**

(45) Publication of the grant of the patent:
**07.03.84 Bulletin 84/10**

(84) Designated Contracting States:
**BE DE FR GB IT NL SE**

(56) References cited:
**GB - A - 837 251**
**GB - A - 1 258 880**
**GB - A - 1 264 416**
**GB - A - 1 492 379**
**GB - A - 1 500 873**

**CHEMICAL ABSTRACTS, vol. 78, no. 22, June 4, 1973, abstract 137085m, Columbus, Ohio, USA**

(73) Proprietor: **THE DOW CHEMICAL COMPANY**
**Dow Center 2030 Abbott Road Post Office Box 1967**
**Midland Michigan 48640 (US)**

(72) Inventor: **Birkelbach, Donald Floyd**
**Route 1, P.O. Box 120F**
**Angleton, Brazoria Texas (US)**
Inventor: **Knight, George Willie**
**1618 North Road**
**Lake Jackson, Brazoria Texas (US)**

(74) Representative: **Hann, Michael, Dr.**
**Marburger Strasse 38**
**D-6300 Giessen (DE)**

High efficiency catalyst for polymerizing olefins, and the use thereof

This invention relates to a new catalyst composition suitable for the polymerization of ethylene, $\alpha$-mono-olefins and $\alpha$-diolefins and to a polymerization process employing such a catalyst composition.

It is well known that olefins such as ethylene, propylene and 1-butene can be polymerized in the presence of metallic catalysts, particularly the reaction products of organometallic compounds and transition metal compounds, to form substantially unbranched polymers of relatively high molecular weight. Typically such polymerizations are carried out at relatively low temperatures and pressures in an inert organic liquid diluent or carrier. Following polymerization, it is common to remove catalyst residues from the polymer by repeatedly treating the polymer with alcohol or other deactivating agent such as aqueous base. Such catalyst deactivation and/or removal procedures are expensive both in time and material consumed as well as the equipment required to carry out such treatment.

Furthermore, most of the known catalyst systems are more efficient in preparing polyolefins in slurry (i.e., wherein the polymer is not dissolved in the carrier) than in solution (i.e., wherein the temperature is high enough to solubilize the polymer in the carrier). The lower efficiencies of such catalysts in solution polymerization are generally believed to be caused by the general tendency of the catalysts to become rapidly depleted or deactivated by the higher temperatures normally employed in solution processes. Also, processes involving the copolymerization of ethylene with higher $\alpha$-olefins exhibit catalyst efficiencies significantly lower than ethylene homopolymerization processes.

British Patent 1 492 379 shows a polymerization catalyst and a process of polymerizing an $\alpha$-olefin under conditions characteristic of Ziegler polymerization with this catalyst. The catalyst is (I) the catalytic reaction product of (A) an ester of tetravalent or trivalent titanium with (B) an intermediate reaction product of (a) an organomagnesium component and (b) a metallic halide or (II) the catalytic reaction product of (C) an intermediate reaction product of an (c) ester of tetravalent or trivalent titanium and (d) an organomagnesium component and (D) a metallic halide. The magnesium component is an organomagnesium compound or a hydrocarbon soluble complex of the organomagnesium compound and an organometallic compound which solubilizes the organomagnesium compound in hydrocarbon.

British Patent 1 500 873 refers to a catalyst and to a process for the Ziegler polymerization of an $\alpha$-olefin with this catalyst. The catalyst is the reaction product of (A) a compound of transition metal (TM), (B) (1) an organomagnesium compound or (2) a complex of an organomagnesium compound and an organometallic compound in an amount sufficient to at least partly solubilize the organomagnesium compound in a hydrocarbon medium and (C) a non-metallic halide corresponding to the formula R'Xn wherein X is halogen, n is an integer, and R' is hydrogen or a hydrocarbyl group at least as active as sec-butyl.

Recently, catalysts having higher efficiencies have been disclosed as illustrated by Scata U.S. Patent 4,115,319. While the increased efficiencies achieved by using these recent catalysts are significant, even higher efficiencies are desirable particularly in production of copolymers such as ·ethylene/hexene-1 or ethylene/octene-1 having a low melt index at densities below 0.920 g/cc.

Also, these high efficiency catalyst generally produce polymers of relatively narrow molecular weight distribution. It is therefore desirable to have, for some applications such as injection molding, high efficiency catalysts which produce polymers and copolymers having a broader molecular weight distribution.

The present invention, in one aspect is a catalyst composition suitable for the polymerization of ethylene, $\alpha$-mono-olefins and $\alpha$-diolefins containing the reaction product of a titanium compound, an organomagnesium compound and a halide and prepared by the reaction of:

(A) a tetravalent titanium compound or a complex of a trivalent titanium compound with an electron donor,

(B) an anhydrous divalent nickel compound,

(C) an organomagnesium component selected from (1) an organomagnesium compound or (2) a complex of an organomagnesium compound and another organometallic compound such as boron trialkyls, alkyl silanes, alkyl tin and alkyl phosphorus compounds in an amount sufficient to solubilize the organomagnesium compound in a hydrocarbon solvent,

(D) a halide source selected from (1) an active non-metallic halide, said non-metallic halide corresponding to the formula R'X wherein R' is hydrogen or hydrocarbyl group and X is halogen and the halogen of the non-metallic halide is at least as active as the halogen of sec-butylchloride or (2) a metallic halide corresponding to the formula $MR_{y-a}X_a$ wherein M is a metal of Group 2B, 3A or 4A of Mendeleev's Periodic Table of Elements, R is a monovalent organic radical, X is halogen, y is a number corresponding to the valence of M and a is a number of 1 to y, and, (E) if the organomagnesium component (C) and/or the halide source (D) provide insufficient quantities of aluminum, an aluminum compound represented by the formula Al Ry'Xy" wherein R and X are as defined above and the sum of y' and y" being three; provided that the proportions of components (A)—(E) are such that the atomic ratio of Mg:Ti is from 1:1 to 2000:1, the atomic ratio of Al:Ti is from 0.01:1 to 2000:1, the atomic ratio of Ni:Ti is from 0.01:1 to 500:1, the atomic ratio of excess halide:Al is from 0.0005:1 to 10:1, whereby the excess halide is the excess which would be theoretically required to convert the magnesium and nickel compound to the dihalide if they were not added in dihalide form.

In a preferred embodiment of the catalyst composition of the invention the nickel compound (B) is nickel halide and the atomic ratios of Mg:Ti, Al:Ti, Ni:Ti, and excess halide:Al are respectively from 5:1 to 200:1, from 0.5:1 to 200:1, from 0.01:1 to 100:1, and from 0.002:1 to 2:1.

According to an even more preferred embodiment, the catalyst composition of the invention comprises nickel chloride as nickel compound (B), the halide source (D) is an alkyl aluminium chloride, and the atomic ratios of Mg:Ti, Al:Ti, Ni:Ti, and excess chloride: Al are respectively from 5:1 to 75:1, from 1:1 to 75:1, from 1:1 to 40:1, and from 0.01 to 1.4:1.

In a second aspect, the invention is a process for polymerizing ethylene, $\alpha$-mono-olefins and $\alpha$-diolefins under conditions characteristic of Ziegler polymerization wherein the above catalyst is employed advantageously as the sole catalyst. The catalysts are capable of producing more than a million parts by weight of olefin polymer or copolymer per part by weight of transition metal. The resulting polymers generally contain lower amounts of catalyst residues than polymers produced with conventional catalyst even after treating to remove the catalyst. Further, these polymers have a relatively broad molecular weight distribution.

The present invention is most advantageously practised in a polymerization process wherein ethylene, an $\alpha$-mono-olefin or an $\alpha$-diolefin is polymerized, generally in the presence of hydrogen as a molecular weight control agent, in a polymerization zone containing an inert diluent and the catalyst. The polymerization is most beneficially carried out under inert atmosphere and relatively low temperature and pressure, although very high pressures are optionally employed.

Ethylene, $\alpha$-mono-olefins and $\alpha$-diolefins which are suitably homopolymerized or copolymerized in the practice of this invention comprise preferably from 2 to 18 carbon atoms. Illustrative of such monomers are ethylene, propylene, butene-1, pentene-1, 3-methylbutene-1, 4-methylpentene-1, hexene-1, octene-1, dodecene-1, octadecene-1, 1,7-octadiene and the like. It is understood that these monomers may be copolymerized with other $\alpha$-olefins and/or with small amounts i.e. up to about 25 weight percent based on the polymer of other ethylenically unsaturated monomers such as styrene, $\alpha$-methylstyrene and similar ethylenically unsaturated monomers which do not destroy conventional Ziegler catalysts. Most benefits are realized in the polymerization of ethylene and mixtures of ethylene and up to 50, especially from 0.1 to 40 weight percent of propylene, butene-1, hexene-1, octene-1, 4-methylpentene-1, 1,7-octadiene or similar higher $\alpha$-mono-olefin or $\alpha$-diolefin based on total monomer.

The anhydrous nickel compound (B) is required to obtain the broader molecular weight distribution. Suitable nickel compounds include those nickel compounds represented by the formula $Ni(Q)_n$ wherein Q is an anion such as halide, particularly chloride or bromide, hydroxide, carboxylate, carbonate, nitrate, sulfate or mixtures thereof and n is two (2) divided by the valence of Q. Particularly suitable nickel compounds are $C_1$—$C_{12}$ carboxylates, and preferably $C_6$—$C_{10}$ carboxylates. Hydrocarbon soluble nickel carboxylates such as, for example, nickel 2-ethylhexanoate or naphthenate are particularly preferred since they form a smaller particle size nickel chloride when prereacted with a suitable halogen source. However, it is not necessary to prereact the nickel carboxylate with a halide source.

Advantageously, the tetravalent titanium compound has the empirical formula: $TiX_n(OR)_{4-n}$ wherein X is a halogen, particularly chlorine or bromine, R is an alkyl or an aryl group having from 1 to 12 carbon atoms and n has a value of 0 to 4. Such titanium compounds are preferably derived from the titanium halides wherein one or more of the halogen atoms are replaced by an alkoxy or aryloxy group. Exemplary of such compounds include tetrabutoxy titanium, tetra (isopropoxy) titanium, dibutoxy titanium dichloride, monoethoxy titanium trichloride, tetraphenoxy titanium and the like.

Advantageously, the trivalent titanium complex has the empirical formula: $TiX_3(L)_x$ wherein X is halide, and L is an electron donating compound such as water or an organic electron donor, e.g., alcohol, ether, ketone, amine or olefin, and x is a number from 1 to 6. Usually, the organic electron donor has from 1 to 12 carbon atoms and donates an unshared pair of electrons to the complex. In preferred complexes, X is chloride or bromide, most preferably chloride and L is alcohol, especially an aliphatic alcohol having 2 to 8 carbon atoms and most preferably 3 to 6 carbon atoms such as isopropyl alcohol, n-propyl alcohol, n-butyl alcohol and isobutyl alcohol. While the exact structure of the complex is not known, it is believed to contain 3 valence bonds to the halide ions and 1 to 6, preferably 2 to 4 coordination bonds to the electron donating compound.

The titanium halide complex is most advantageously prepared by heating the trivalent titanium halide dispersed in the electron donating compound under nitrogen or similar inert atmosphere. Usually the formation of the complex is visually indicated by a definite change in color. For example, when the dark purple $\alpha$-TiCl$_3$ is heated in anhydrous isopropyl alcohol under nitrogen, complex formation is indicated by the formation of a brilliant blue solution. The complex is normally solid, but liquid complexes can be used.

In addition to a $\alpha$-TiCl$_3$, the $\Delta$, $\gamma$ and $\beta$ crystalline forms of titanium trichloride are advantageously employed in the preparation of the complex. Also suitable are titanium tribromide, titanium trifluoride and the like. Of the foregoing, the $\Delta$- and $\alpha$- forms of titanium trichloride are preferred. Exemplary electron donating compounds include $C_1$—$C_{10}$ aliphatic alcohols, e.g., isopropyl alcohol, ethanol, n-propyl alcohol, butanol and others; $C_1$—$C_{12}$ ethers, ketones, aldehydes, amines and olefins; and water.

The preferred organomagnesium component is a hydrocarbon soluble complex of the formula $MgR''_2 \cdot xMR''_y$ wherein $R''$ is hydrocarbyl or hydrocarbyloxy, M is aluminum, zinc or mixtures thereof and x is about 0.001 to 10, especially from about 0.15 to about 2.5, and y denotes the number of hydrocarbyl groups which corresponds to the valence of M. As used herein, hydrocarbyl and hydrocarbyloxy are monovalent organic radicals. Preferably, hydrocarbyl is alkyl, cycloalkyl, aryl, aralkyl, alkenyl and similar hydrocarbon radicals having 1 to 20 carbon atoms, with alkyl having 1 to 10 carbon atoms being especially preferred. Likewise, preferably hydrocarbyloxy is alkoxy, cycloalkyloxy, aryloxy, aralkyloxy, alkenyloxy and similar oxyhydrocarbon radicals having 1 to 20 carbon atoms, with alkyloxy having 1 to 10 carbon atoms preferred. Hydrocarbyl is preferred over hydrocarbyloxy.

This complex is prepared by reacting particulate magnesium such as magnesium turnings, or magnesium particles with about a stoichiometric amount of hydrocarbyl or hydrocarbyloxy halide, illustrated as $R'X$. The resulting hydrocarbon insoluble $MgR''_2$ is solubilized by adding the organometallic compound such as $AlR''_3$ or mixtures thereof with $ZnR''_2$. The amount of organometallic compounds which is added to the $MgR''_2$ to form the organomagnesium complex should be enough to solubilize a significant amount of $MgR''_2$, e.g., at least 5 weight percent, preferably at least 50 weight percent, and especially preferred all the $MgR''_2$. When employing a mixture of $AlR''_3$ and $ZnR''_2$ to solubilize $MgR''_2$, the atomic ratio of Zn to Al is from about 3000:1 to about 0.1:1, preferably from about 350:1 to about 1:1.

In order to obtain maximum catalyst efficiency at polymerization temperatures above 180°C, it is desirable to minimize the amount of aluminum in the complex and the total catalyst. Accordingly, for catalysts having Al:Ti atomic ratios less than 120:1, it is desirable to have a Mg:Al atomic ratio more than 0.3:1, preferably from about 0.5:1 to 10:1.

Other organometallic compounds than $AlR''_3$, $ZnR''_2$ or mixtures thereof can be used to solubilize the organomagnesium compound in hydrocarbon, usually in an amount sufficient to produce an atomic ratio of 0.01:1 to 10:1 of metal of the organometallic compounds to magnesium. Examples of other organometallic compounds include boron trialkyls such as boron triethyl, alkyl silanes such as dimethyl silane and tetraethyl silane, alkyl tin and alkyl phosphorus compounds.

Alternatively, organomagnesium compounds can be used without an aluminum or zinc complex particularly if rendered soluble in hydrocarbon by addition of ether, amine, etc. More recently, hydrocarbon soluble organomagnesium compounds have been prepared as taught in Kamienski et al. U.S. 3,646,231. These organomagnesium compounds are particularly desirable.

Preferably the organomagnesium compound is a hydrocarbon soluble dihydrocarbylmagnesium such as the magnesium dialkyls and the magnesium diaryls. Exemplary magnesium dialkyls include n-butyl-sec-butyl magnesium, diisopropyl magnesium, di-n-hexyl magnesium, isopropyl-n-butyl magnesium, ethyl-n-hexyl magnesium, ethyl-n-butyl magnesium, di-n-octyl magnesium and others wherein alkyl has from 1 to 20 carbon atoms. Exemplary magnesium diaryls include diphenylmagnesium, dibenzylmagnesium, and especially preferred is ditolylmagnesium. Also suitable are alkyl and aryl magnesium alkoxides and aryloxides and aryl and alkyl magnesium halides with the halogen-free organomagnesium compounds being more desirable.

The preferred halide sources are the active non-metallic halides of the formula $R'X$ including hydrogen halides and active organic halides such as t-alkyl halides, allyl halides, benzyl halides and other active hydrocarbyl halides. By an active organic halide is meant a hydrocarbyl halide that contains a labile halogen at least as active, i.e., as easily lost to another compound, as the halogen of sec-butyl chloride and preferably as active as the halogen of t-butyl chloride. Active organic dihalides, trihalides, and polyhalides are also suitably employed. Examples of preferred active non-metallic halides are hydrogen chloride, hydrogen bromide, t-butyl chloride, t-amyl bromide, allyl chloride, benzyl chloride, crotyl chloride, methylvinyl carbinyl chloride, $\alpha$-phenylethyl bromide and diphenyl methyl chloride. Most preferred are hydrogen chloride, t-butyl chloride, allyl chloride and benzyl chloride.

Suitable metallic halides as set forth by formula hereinbefore are organometallic halides and metal halides wherein the metal is in Group 2B, 3A or 4A, of Mendeleev's Periodic Table of Elements. Preferred metallic halides are aluminum halides of the formula $AlR_{3-a}X_a$ wherein each R is independently hydrocarbyl such as alkyl, X is a halogen, and a is a number from 1 to 3. Most preferred are alkylaluminum halides such as ethylaluminum sesquichloride, diethyl-aluminum chloride, ethylaluminum dichloride, and diethyl-aluminum bromide, with ethylaluminum dichloride being especially preferred. Alternatively, a metal halide such as aluminum trichloride or a combination of aluminum trichloride with an alkyl aluminum halide or trialkyl aluminum compound may be employed.

The organic moieties of the aforementioned organomagnesium, e.g., $R''$, and the organic moieties of the halide source, e.g., R and $R'$, are suitably any other organic radical provided that they do not contain functional groups that poison conventional Ziegler catalysts. Preferably such organic moieties do not contain active hydrogen, i.e., those sufficiently active to react with the Zerewitinoff reagent.

In cases wherein neither the organomagnesium component nor the halide source contains aluminium, it is necessary to include in the total catalyst an aluminum compound such as an alkyl aluminum compound, e.g., a trialkyl aluminum, an alkyl aluminum halide or an aluminum halide.

4

In order to maximize catalyst efficiency, the catalyst is prepared by mixing the components of the catalyst in an inert liquid diluent in the following especially preferred order: nickel compound, organomagnesium compound, halide source and titanium compound or complex. Somewhat less preferred is the order of addition wherein the organomagnesium component is first added to an inert liquid diluent followed by the addition of the halide source, the nickel compound and then the titanium compound or complex. The foregoing catalyst components are combined in proportions sufficient to provide atomic ratios as previously mentioned.

In the most preferred manner, the nickel halide is preformed from the reaction of a hydrocarbon soluble nickel carboxylate such as nickel di-2-ethylhexanoate or nickel dinaphthenate with the halogen source in a hydrocarbon diluent which precipitates anhydrous nickel halide in a very fine particulate form.

If polymerization temperatures below 180°C are employed, the atomic ratios of Al:Ti may be from 0.1:1 to 2000:1, preferably from 1:1 to 200:1. However, when polymerization temperatures above 180°C are employed, the aluminum compound is used in proportions such that the Mg:Al ratio is more than 0.3:1, preferably from 0.5:1 to 10:1, and Al:Ti ratio is less than 120:1, preferably less than 75:1. The use of very low amounts of aluminum necessitates the use of high purity solvents or diluents in the polymerization zone and other components should be essentially free of impurities which react with aluminum alkyls. Otherwise additional quantities of an organometallic compound must be used to react with such impurities. Moreover, in the catalyst the aluminum compound should be in the form of trialkyl aluminum or alkyl aluminum halide substantially free of alkyl aluminum dihalide.

The catalytic components are preferably combined in the presence of an inert liquid diluent such that the resultant catalyst slurry is from 0.005 to 1.0 molar (moles/liter) with respect to magnesium. Suitable inert organic diluents include liquified ethane, propane, isobutane, n-butane, n-hexane, the various isomeric hexanes, isooctane, paraffinic mixtures of alkanes having from 8 to 12 carbon atoms, cyclohexane, methylcyclopentane, dimethylcyclohexane, dodecane and industrial solvents composed of saturated or aromatic hydrocarbons such as kerosene, naphthas, etc., especially when freed of any olefin compounds and other impurities, and having boiling points in the range from −50° to 200°C. Also included as suitable inert diluents are benzene, toluene, ethylbenzene, cumene and decaline.

Mixing of the components to provide the desired catalyst is advantageously carried out under an inert atmosphere such as nitrogen or argon at temperatures in the range from −100 to 200°C, preferably from 0° to 100°C. The mixing time is not critical as an active catalyst most often is formed in 1 minute or less. In the preparation of the catalyst, it is not necessary to separate hydrocarbon soluble and insoluble components.

Polymerization of ethylene, $\alpha$-mono-olefins and $\alpha$-diolefins is effected by contacting a catalytic amount of the catalyst composition and the monomer at temperatures advantageously in the range from 0 to 300°C, and preferably at solution polymerization temperatures, e.g. from 130° to 250°C, for a residence time of a few seconds to 48 hours or more, preferably 15 seconds to 2 hours. Also it is generally desirable to carry out the polymerization in the absence of moisture and oxygen using an inert liquid carrier which may be an organic diluent, solvent, or excess monomer. Diluents employed in the catalyst preparation are particularly suitable.

To obtain maximum catalyst yields in terms of polymer weight per weight of titanium, sufficient catalyst should be used to provide from 0.0001 to 0.1 millimoles titanium per liter of diluent in the polymerization zone. However, the optimum catalyst concentration will depend upon polymerization conditions such as temperature, pressure, solvent and presence of catalyst poisons.

To realize the full benefit of the high efficiency catalyst, care must be taken to avoid oversaturation of the solvent with polymer.

To optimize catalyst yields in the polymerization of ethylene, it is preferable to maintain an ethylene concentration in the solvent in the range from 1 to 10 weight percent and most advantageously 1.2 to 2 weight percent. Also care must be taken to avoid oversaturation of the solvent with the resulting polymer. For best results, the amount of polymer in the carrier should not exceed about 50 weight percent based on the total weight of the reaction mixture.

Hydrogen can be employed in concentrations ranging from 0.001 to 1 mole per mole of monomer to reduce the molecular weight of the resultant polymer by addition with the monomer stream or other conventional means.

The preferred polymerization pressures are relatively low, e.g., from 50 to 1000 psig (344.7 to 6894.8 kPa) especially from 100 to 600 psig (689.5 to 4136.9 kPa). However, polymerization can occur at pressures from atmospheric to the pressure limit of the reactor. Stirring during polymerization is desirable to maintain better temperature control and more uniform concentrations throughout the polymerization zone.

The ethylene, $\alpha$-mono-olefin or the $\alpha$-diolefin monomer or mixture of monomers is contacted with the catalyst in the usual manner, preferably by bringing the catalyst and monomer together with intimate agitation provided by stirring or other means. Agitation can be continued during polymerization, but in some instances polymerization in an unstirred zone is desirable. Adequate means should be provided for dissipating the exothermic heat of polymerization. With more active catalyst, means for refluxing monomer and solvent is often advantageous.

The polymerization can be effected in batch or continuous manner, such as, for example, by passing the reaction mixture through an elongated reaction tube which is contacted externally with suitable cooling medium to maintain the desired reaction temperature, or by passing the reaction mixture through an equilibrium overflow reactor or a series of the same.

The polymer is recovered from the polymerization mixture by removing any unreacted monomer and solvent. No further purification is required. In some instances, however, it may be desirable to add a small amount of a conventional catalyst deactivating reagent. The resultant polymer contains insignificant amounts of catalyst residue and possesses a relatively broad molecular weight distribution.

The following examples are given to further illustrate the invention. All parts and percentages are by weight unless otherwise indicated. The melt index values $I_2$ and $I_{10}$ were determined by the method of ASTM D 1238-70 and the density values were determined by ASTM D 1248-74.

In Examples 1—7, the catalysts were prepared in n-heptane, 2,2,4-trimethylpentane or *Isopar® E (a mixture of saturated isoparaffins having 8 to 9 carbon atoms) under nitrogen atmosphere containing less than 5 ppm oxygen and 5 ppm water. Polymerizations were carried out in five liter stainless steel stirred batch reactor using two liters of dry, oxygen-free Isopar® E as carrier diluents. After polymerization, the reactor contents were dumped into a beaker, cooled, and the polymer recovered, dried in a vacuum oven and analyzed. The melt index values $I_2$ and $I_{10}$ were determined by the method of ASTM D-1238-70 and the density values by the method of ASTM D-1248. Catalyst efficiencies are reported as grams of polyethylene per gram of titanium, gPE/gTi.

Example 1
Polyethylene
A. Preparation of anhydrous $NiCl_2$

An anhydrous nickel chloride ($NiCl_2$) slurry in Isopar® E was prepared as follows: $NiCl_2 \cdot 6H_2O$ was heated in a vacuum oven at about 100°C for 8—10 hours. The resultant partially dried product was then extracted with n-propyl alcohol into Isopar® E to produce a fine slurry of anhydrous $NiCl_2$ in Isopar® E. The n-propyl alcohol was then removed by distillation.

B. Preparation of the catalyst composition

The catalyst composition was prepared by adding with stirring to a 4-ounce (118 cc) serum bottle under a nitrogen atmosphere the following components in the indicated order:

48.45 ml of Isopar® E
0.18 ml of 0.084 M anhydrous $NiCl_2$ in Isopar® E
0.74 ml of 0.385 M Mg(n-Bu, sec-Bu) in Isopar® E
0.44 ml of 0.85 M $EtAlCl_2$ in Isopar® E
0.19 ml of 0.04 M Ti(OiPr)$_4$ in Isopar® E

The reaction was complete within 5 minutes at ambient temperature.
The atomic ratios of the catalyst components were as follows:
Mg/Ti=38:1
Al/Ti=50:1
Ni/Ti=2:1
excess Cl/Al=24:50=0.48:1

C. Polymerization

Into the stirred 5-liter stainless steel reactor was added two liters of Isopar® E, 19 psig (131 kPa) of hydrogen, 120 psig (827.4 kPa) of ethylene. The reactor was heated to 150°C and then 10 ml (0.0015 millimoles Ti) of the above catalyst composition was added. The temperature was controlled at 150°C and the total pressure was maintained constant at 160 psig (1103.2 kPa) for 20 minutes yielding 100 grams of polyethylene, a catalyst efficiency of $1.14 \times 10^6$ grams of polymer per gram of Ti. The polymer had a melt index ($I_2$) of 4.35, a melt index ($I_{10}$) of 38.72, an $I_{10}/I_2$ of 8.9 and a density of 0.9647 g/cc.

Example 2
Ethylene/1-hexene copolymer
A. Employing the procedures of Example 1, a catalyst was prepared using the following components listed in order of addition:

42.12 ml of Isopar® E
.45 ml of 0.084 M anhydrous $NiCl_2$
5.8 ml of 0.045 M $MgCl_2$ (prepared from HCl and n-Bu-s-Bu-Mg)
.09 ml of 0.85 M ethylaluminum dichloride
.33 ml of 0.9 M aluminumtriethyl
1.21 ml of 0.0062 M $TiCl_3$ (iPrOH)$_x$

---

*Registered Trade Mark.

6

The atomic ratios of this catalyst were as follows:
Mg/Ti=35:1
Al/Ti=50:1
Ni/Ti=5:1
excess Cl/Al=0.4:1

B. Polymerization was conducted as described in Example 1 at 150°C using twenty (20) milliliters of hexene-1, 20 psig (137.0 kPa) $H_2$ and 120 psig (827.4 kPa) ethylene. The final reactor pressure was 165 psig (1137.2 kPa). Twenty milliliters (0.003 millimoles of Ti) of the catalyst yielded 156 grams of polymer for an efficiency of $1.1 \times 10^6$ g polymer/g Ti. The polymer had a broad molecular weight distribution with a high molecular weight tail as indicated by gel permeation chromatography and the following properties:
0.69 melt index ($I_2$)
8.14 ($I_{10}$)
11.8 $I_{10}/I_2$
0.9427 g/cc density

Example 3
Following the general operating procedure of Example 1 and/or 2, several other catalysts prepared from anhydrous nickel chloride were evaluated with a total catalyst concentration of 0.001 millimolar based on Ti, 120 psig (827.4 kPa) of ethylene and a polymerization temperature of 150°C. The catalysts are given in Table I and polymerization results in Table II.

TABLE I

| Run No. | Order of addition[1] | Atomic ratios Mg/Ni/Al/XsCl/Ti |
|---|---|---|
| 3-1 | $NiCl_2/DnBMg \cdot 1/6ATE/EADC/ATE/Ti(OiPr)_4$ | 20/20/50/20/1 |
| 3-2 | Same | Same |
| 3-3 | Same | Same |
| 3-4 | Same | Same |
| 3-5 | Same | 10/30/50/20/1 |
| 3-6 | Same | 30/10/50/20/1 |
| 3-7 | Same | 20/20/50/20/1 |
| 3-8 | Same | Same |
| 3-9 | Same | Same |
| 3-10 | $NiCl_2/DnBMg \cdot 1/3/ATE/EADC/ATE/Ti(OiPr)_4$ | 30/10/38/36/1 |
| 3-11 | Same | Same |
| 3-12 | $MgCl_2/NiCl_2/EADC/ATE/Ti(OiPr)_4$ | 30/10/38/36/1 |
| 3-13 | $MgCl_2/NiCl_2/EADC/ATE/Ti(OiPr)_4$ | 30/10/30/10/1 |
| 3-14 | $NiCl_2/nBsBMg/EADC/Ti(OiPr)_4$ | 38/2/50/24/1 |
| 3-15 | Same | 36/4/50/28/1 |
| 3-16 | $NiCl_2/nBsBMg/ATE/EADC/Ti(OiPr)_4$ | 40/1/80/10/1 |
| 3-17* | $NiCl_2/nBsBMg/EADC/Ti(OiPr)_4$ | 40/2/50/20/1 |
| 3-18 | Same | 40/5/50/20/1 |
| 3-19 | $NiCl_2/MgCl_2/EADC/ATE/TiCl_3 \cdot (iPrOH)_x$ | 35/5/50/20/1 |

[1]$NiCl_2$=anhydrous chloride prepared as Example 1-A
$DnBMg \cdot 1/6ATE$=di(n-butyl)magnesium · 1/6 aluminum triethyl
EADC=ethyl aluminum dichloride
·ATE=aluminum triethyl
$Ti(OiPr)_4$=tetra(isopropoxy)titanium
$DnBMg \cdot 1/3ATE$=di(n-butyl) magnesium · 1/3 aluminum triethyl
nBsBMg=n-butyl s-butyl magnesium
$TiCl_3 \cdot (iPrOH)_x$=complex of titanium trichloride and isopropyl alcohol, x=~3—4
*The nickel chloride was prepared by drying at 350°C and ball milling for 24 hours.

TABLE II

| Run No. | Catalyst efficiency g polymer/ g titanium $\times 10^{-6}$ | Hydrogen pressure psig (kPa) | Melt index $I_2$ | Melt index $I_{10}$ | $I_{10}/I_2$ | Density g/cc |
|---|---|---|---|---|---|---|
| 3-1 | 0.84 | 0 (0) | 0.02 | 0.35 | 17.5 | 0.9546 |
| 3-2 | 1.2 | 19 (131) | 0.28 | 3.22 | 11.5 | 0.9601 |
| 3-3 | 1.3 | 38 (262) | 0.21 | 2.47 | 11.8 | 0.9599 |
| 3-4 | 1.4 | 57 (383) | 0.14 | 1.75 | 12.5 | 0.9587 |
| 3-5 | 0.47 | 19 (131) | 0.02 | 0.49 | 24.5 | 0.9555 |
| 3-6 | 1.7 | 19 (131) | 0.17 | 3.24 | 19.1 | 0.9603 |
| 3-7 | 1.3 | 19 (131) | 0.15 | 2.63 | 17.5 | 0.9588 |
| 3-8 | 1.2 | 38 (262) | 0.72 | 1.61 | 22.4 | 0.9580 |
| 3-9* | 0.8 | 38 (262) | 0.10 | 1.57 | 15.7 | 0.9588 |
| 3-10 | 1.5 | 19 (131) | 0.77 | 8.35 | 10.8 | 0.9625 |
| 3-11 | 1.6 | 19 (131) | 0.34 | 5.97 | 17.6 | 0.9616 |
| 3-12 | 0.6 | 19 (131) | 0.06 | 0.94 | 15.7 | 0.9548 |
| 3-13 | 0.71 | 19 (131) | 0.05 | 0.70 | 14.0 | 0.9573 |
| 3-14 | 1.4 | 19 (131) | 4.35 | 38.68 | 8.9 | 0.9647 |
| 3-15 | 1.1 | 19 (131) | 1.29 | 13.33 | 10.3 | 0.9636 |
| 3-16 | 1.5 | 19 (131) | 6.45 | 52.19 | 8.1 | 0.9657 |
| 3-17 | 1.4 | 19 (131) | 20.92 | 142.91 | 6.8 | 0.9687 |
| 3-18 | 2.0 | 19 (131) | 11.25 | 90.86 | 8.1 | 0.9679 |
| 3-19** | 1.1 | 19 (131) | 0.69 | 8.14 | 11.8 | 0.9427 |

*Polymerization temperature was 180°C instead of 150°C
**20 ml of hexene-1 was added to prepare a copolymer of ethylene/hexene-1.

Example 4
A. Preparation of anhydrous $NiCl_2$
To a mixture of .60 gram (0.5 millimoles) of a nickel di-2-ethylhexanoate solution in mineral spirits containing 6% Ni by weight (commercially available from the Ventron Corp., Danvers, Mass.) and 97.8 ml of 2,2,4-trimethyl pentane (TMP) was added 1.65 ml of 0.94 M (1.5 moles) ethyl aluminum dichloride (EADC). Immediately upon addition of the EADC, a fine particle size, gold colored slurry of $NiCl_2$ was formed.

B. Preparation of the catalyst composition
The catalyst was prepared by reacting at ambient temperature under a nitrogen atmosphere the following components in the indicated order:
94.47 ml TMP
3.0 ml of the 0.005 M $NiCl_2$ in TMP
0.97 ml of 0.62 M butyl ethyl magnesium (BEM)
0.64 ml of 0.94 M EADC
0.32 ml of 0.91 M triethylaluminum (ATE) in TMP
0.60 ml of 0.025 M tetra-isopropyl titanate (Ti(OiPr)$_4$) in TMP.

The reaction was complete within 5 minutes or less.
The atomic ratios of the catalyst components were as follows:
Mg/Ti=40:1
Al/Ti=60:1
Ni/Ti=1:1
excess Cl:Al=0.1:1

C. Polymerization
As described in Example 1C, the 5-liter reactor charged with 2 liters of Isopar® E was heated to 150°C and then was added 19 psig (131 kPa) of hydrogen and 160 psig (1103.2 kPa) of ethylene added for a total reactor pressure of 200 psig (1379 kPa). Twenty ml (0.003 moles of Ti) of the catalyst (4B) was injected into the reactor, and the pressure maintained at 200 psig (1379 kPa) with ethylene for ($1.23 \times 10^6$ gm PE/gm Ti) was obtained with a melt index of 0.78, an $I_{10}$ of 8.70, $I_{10}/I_2$ of 11.15, and a density of 0.9610.

Example 5
Following the general procedure of Example 4, several other catalysts were prepared using $NiCl_2$

formed in situ and evaluated using a total catalyst concentration of 0.001 millimolar based on Ti and a polymerization temperature of 150°C. Unless otherwise indicated the ethylene pressure was 120 psig (827.4 kPa) and the total pressure was 160 psig (1103.2 kPa). Typical data are given in Tables III and IV.

TABLE III

| Run No. | Order of addition[1] | Atomic ratios Mg/Ni/Al/XsCl/Ti |
|---|---|---|
| 5-1 | Ni(OH)$_2$/BEM/EADC/Ti(OiPr)$_4$ | 40/2/50/20/1 |
| 5-2 | Same | 40/4/50/20/1 |
| 5-3 | Same | 40/8/50/20/1 |
| 5-4 | Ni(OH)$_2$/BEM/EADC/Ti(OiPr)$_4$/ATE | 40/2/70/20/1 |
| | The atomic ratio of 70 Al was 50 from EDAC+20 from ATE | |
| 5-5 | NiCO$_3$/BEM/EADC/Ti(OiPr)$_4$ | 40/2/50/20/1 |
| 5-6 | Same | 40/4/50/20/1 |
| 5-7 | Ni(Oct)$_2$/BEM/EADC/Ti(OiPr)$_4$ | 40/2/50/16/1 |
| 5-8 | Same | 40/4/50/12/1 |
| 5-9 | Ni(Oct)$_2$/BEM/EADC/Ti(OiPr)$_4$/ATE | 40/8/70/4/1 |
| | The atomic ratio of 70 for Al was 50 from EADC+20 from ATE | |
| 5-10 | Ni(Ac-Ac)$_2$/BEM/EADC/Ti(OiPr)$_4$ | 40/2/50/20/1 |
| 5-11 | Same | 40/4/50/20/1 |

[1]Ni(OH)$_2$=anhydrous nickel hydroxide
BEM=n-butyl, ethyl magnesium
EADC=ethyl aluminum dichloride
Ti(OiPr)$_4$=tetra (isopropoxy) titanium
ATE=aluminum triethyl
NiCO$_3$=anhydrous chloride carbonate
Ni(Oct)$_2$=anhydrous nickel octoate
Ni(Ac-Ac)$_2$=anhydrous nickel acetylacetonate

TABLE IV

| Run No. | Catalyst efficiency g polymer/ g titanium $\times 10^{-6}$ | Hydrogen pressure psig (kPa) | Melt index $I_2$ | Melt index $I_{10}$ | $I_{10}/I_2$ | Density g/cc |
|---|---|---|---|---|---|---|
| 5-1 | 1.13 | 19 (131) | 12.42 | 94.44 | 7.60 | .9654 |
| 5-2 | 1.53 | 19 (131) | 17.63 | 124.88 | 7.08 | .9681 |
| 5-3 | 0.90 | 19 (131) | 9.42 | 70.40 | 7.39 | .9644 |
| 5-4 | 1.29 | 19 (131) | 11.47 | 85.65 | 7.47 | .9668 |
| 5-5 | 1.78 | 19 (131) | 15.63 | 120.44 | 7.84 | .9670 |
| 5-6 | 1.71 | 19 (131) | 16.14 | 106.74 | 6.61 | .9666 |
| 5-7 | 0.72 | 19 (131) | 21.05 | 145.38 | 6.91 | .9662 |
| 5-8 | 0.82 | 19 (131) | 10.44 | 75.96 | 7.28 | .9657 |
| 5-9 | 0.68 | 19 (131) | 3.44 | 26.82 | 7.80 | .9623 |
| 5-10* | 0.71 | 19 (131) | 2.71 | 23.72 | 8.75 | .9626 |
| 5.11* | 0.55 | 19 (131) | 0.31 | 4.51 | 14.55 | .9691 |

*The ethylene pressure was 133 psig (917 kPa), the total pressure was 190 psig (1310 kPa) and the reaction medium was 2,2,4-trimethylpentane.

Example 6

Data from another series of catalysts prepared and evaluated as described in Example 4 are given in Tables V and VI. Unless otherwise indicated, the total catalyst concentration was 0.001 millimolar based on Ti, the polymerization temperature was 150°C, and the ethylene pressure was 160 psig (1103.2 kPa) and the total pressure 200 psig (1379 kPa).

9

## TABLE V

| Run No. | Order of addition[1] | Atomic ratios Mg/Ni/Al/XsCl/Ti |
|---|---|---|
| 6-1 | (NEH/EADC)/BEM/EADC/ATE/Ti(OiPr)$_4$<br>The atomic ratio of 64 Al was from 4 (NEH/EADC)+40 EADC+20 ATE | 40/1/64/6/1 |
| 6-2 | NEH/BEM/EADC/ATE/Ti(OiPr)$_4$<br>The atomic ratio of 75 for Al was from 55 EADC+20 ATE | 40/2.5/75/25/1 |
| 6-3 | (NEH/HCl)/ATE/DEM/EADC/Ti(OiPr)$_4$<br>The NEH and HCl were prereacted at a mole ratio of 5/10 in 2,2,4-trimethylpentane. The atomic ratio of 70 for Al was from 20 ATE+50 EADC | 40/5/70/20/1 |
| 6-4 | NEH/EADC/Ti(OiPr)$_4$/nBsBM$_2$ | 40/5/50/10/1 |
| 6-5 | NEH/TiCl$_4$/EADC/nBsBMg | 40/2/50/24/2 |
| 6-6 | Same | 40/2/50/24/2 |
| 6-7 | NEH/nBsBMg/EADC/Ti(OiPr)$_4$ | 40/2/50/16/1 |
| 6-8 | NEH/TiCl$_4$/SnCl$_4$/ATE/DBM | 40/2/50/10/1 |
| 6-9 | (NEH/HCl)/nBsBMg/EADC/Ti(OiPr)$_4$<br>NEH and HCl prereacted at mole ratio of 5/10. The NEH in 2,2,4-trimethyl pentane was passed through SiO$_2$ prior to reaction with HCl. | 40/5/50/20/1 |
| 6-10 | (Comparative) EADC/Ti(OiPr)$_4$/nBsBMg | 40/0/50/20/1 |
| 6-11 | (NEH/HCl)/EADC/Ti(OiPr)$_4$/nBsBMg<br>The NEH and HCl were prereacted at a mole ratio of 2/4. The NEH in 2,4,4-trimethyl pentane was passed through SiO$_2$ before reacting with the HCl. | 40/2/50/20/1 |
| 6-12 | (NEH/HCl)/nBsBMg/EADC/Ti(OiPr)$_4$<br>The NEH and HCl were prereacted at a mole ratio of 2/4. The NEH in 2,4,4-trimethyl pentane was passed through SiO$_2$ before reacting with the HCl. | 40/2/50/20/1 |
| 6-13 | NiOH$_2$/(NEH/HCl)/EADC/Ti(OiPr)$_4$/nBsBMg<br>The NEH and HCl were prereacted at a mole ratio of 2/4. The NEH in 2,4,4-trimethyl pentane was passed through SiO$_2$ prior to reacting with the HCl. The atomic ratio of 4 for Ni was from 2 Ni(OH)$_2$+2 NEH. | 40/4/50/20/1 |
| 6-14 | Same<br>The atomic ratio of 7 for Ni was from 5 Ni(OH)$_2$+2 NEH | 40/7/50/20/1 |
| 6-15 | NEH/Ni(OH)$_2$/EADC/Ti(OiPr)$_4$/ATE/nBsBMg<br>The atomic ratio of 7 for Ni was from 2 NEH+5 Ni(OH)$_2$. The atomic ratio of 60 for Al was from 50 EADC+10 ATE | 40/7/60/20/1 |

[1]NEH=Ni(2-ethylhexanoate)$_2$
EADC=ethyl aluminum dichloride
BEM=n-butyl, ethyl magnesium
ATE=aluminum triethyl
Ti(OiPr)$_4$=tetra (isopropoxy) titanium
HCl=hydrogen chloride
nBsBMg=n-butyl, sec-butyl magnesium
TiCl$_4$=titanium tetrachloride
SnCl$_4$=tin tetrachloride

TABLE VI

| Run No. | Catalyst efficiency g polymer/ g titanium $\times 10^{-6}$ | Hydrogen pressure psig (kPa) | Melt index $I_2$ | Melt index $I_{10}$ | $I_{10}/I_2$ | Density g/cc |
|---|---|---|---|---|---|---|
| 6-1 | 1.23 | 19 (131) | 0.78 | 8.70 | 11.15 | .9610 |
| 6-2 | 1.39 | 19 (131) | 3.04 | 30.34 | 9.98 | .9656 |
| 6-3 | 2.20 | 19 (131) | 0.55 | 8.25 | 15.00 | .9613 |
| 6-4 | 1.51 | 19 (131) | 0.31 | 4.04 | 13.03 | .9628 |
| 6-5 | 2.65 | 19 (131) | 1.09 | 11.54 | 10.59 | .9641 |
| 6-6 | 1.32 | 19 (131) | 1.06 | 11.46 | 10.81 | .9620 |
| 6-7 | — | 19 (131) | 1.22 | 13.41 | 10.99 | .9628 |
| 6-8 | 1.14 | 19 (131) | 6.52 | 49.29 | 7.56 | .9644 |
| 6-9 | 0.92 | 19 (131) | 0.08 | 1.58 | 19.75 | .9590 |
| 6-10 (Comparative) | 1.88 | 19 (131) | 12.37 | 90.08 | 7.28 | .9686 |
| 6-11 | 1.45 | 19 (131) | 0.55 | 7.43 | 13.51 | .9637 |
| 6-12 | 1.30 | 19 (131) | 0.31 | 3.83 | 12.35 | .9613 |
| 6-13 | 1.87 | 19 (131) | 0.53 | 6.53 | 12.32 | .9628 |
| 6-14 | 2.21 | 19 (131) | 0.73 | 10.38 | 14.22 | .9646 |
| 6-15 | 2.27 | 19 (131) | 2.74 | 26.72 | 9.75 | .9655 |

Example 7

Ethylene/1-octene copolymers

Data from another series of catalysts prepared as described in Example 4 and evaluated for the polymerization of ethylene/1-octene are given in Tables VII and VIII. Unless otherwise indicated, the total catalyst concentration was 0.001 millimolar on Ti and the polymerization temperature was 150°C. The reactor was charged with 150 psig (1034.2 kPa) of ethylene, and 200 ml of 1-octene as comonomers. No hydrogen was added. The total reactor pressure was 200 psig (1379 kPa).

TABLE VII

| Run No. | Order of addition[1] | Atomic ratios Mg/Ni/Al/XsCl/Ti |
|---|---|---|
| 7-1 | EADC/Ti(OiPr)$_4$/nBsBMg (Comparative) | 40/0/50/20/1 |
| 7-2 | (NEH/HCl)/nBsBMg/EADC/Ti(OiPr)$_4$ The NEH and HCl were prereacted at a mole ratio of 2/4. | 40/5/50/20/1 |
| 7-3 | (NEH/HCl)/nBsBMg/EADC/Ti(OiPr)$_4$ The NEH and HCl were prereacted at a mole ratio of 5/10 | 40/5/50/20/1 |

[1]NEH=Ni(2-ethylhexanoate)$_2$
EADC=ethyl aluminum dichloride
Ti(OiPr)$_4$=tetra (isopropoxy) titanium
nBsBMg=n-butyl, sec-butyl magnesium
HCl=hydrogen chloride

TABLE VIII

| Run No. | Catalyst efficiency g polymer/ g titanium $\times 10^6$ | Melt index $I_2$ | Melt index $I_{10}$ | $I_{10}/I_2$ | Density g/cc |
|---|---|---|---|---|---|
| 7-1* | 1.4 | 0.58 | 5.77 | 9.95 | .9263 |
| 7-2 | 1.4 | 0.74 | 9.79 | 13.23 | .9196 |
| 7-3 | 1.7 | 0.50 | 6.56 | 13.12 | .9223 |

*Comparative

## Claims

1. A catalyst composition suitable for the polymerization of ethylene, $\alpha$-mono-olefins and $\alpha$-diolefins containing the reaction product of a titanium compound, an organomagnesium compound and a halide and characterized in that it is prepared by the reaction of:

(A) a tetravalent titanium compound or a complex of a trivalent titanium compound with an electron donor,

(B) an anhydrous divalent nickel compound,

(C) an organomagnesium component selected from (1) an organomagnesium compound or (2) a complex of an organomagnesium compound and another organometallic compound such as boron trialkyls, alkyl silanes, alkyl tin and alkyl phosphorus compounds in an amount sufficient to solubilize the organomagnesium compound in a hydrocarbon solvent,

(D) a halide source selected from (1) an active non-metallic halide, said non-metallic halide corresponding to the formula R'X wherein R' is hydrogen or hydrocarbyl group and X is halogen and the halogen of the non-metallic halide is at least as active as the halogen of sec-butylchloride or (2) a metallic halide corresponding to the formula $MR_{y-a}X_a$ wherein M is a metal of Group 2B, 3A or 4A of Mendeleev's Periodic Table of Elements, R is a monovalent organic radical, X is halogen, y is a number corresponding to the valence of M and a is a number of 1 to y, and,

(E) if the organomagnesium component (C) and/or the halide source (D) provide insufficient quantities of aluminum, an aluminum compound represented by the formula Al Ry'Xy" wherein R and X are as defined above and the sum of y' and y" being three; provided that the proportions of components (A)—(E) are such that the atomic ratio of Mg:Ti is from 1:1 to 2000:1, the atomic ratio of Al:Ti is from 0.01:1 to 2000:1, the atomic ratio of Ni:Ti is from 0.01:1 to 500:1, the atomic ratio of excess halide:Al is from 0.0005:1 to 10:1, whereby the excess halide is the excess which would be theoretically required to convert the magnesium and nickel compound to the dihalide if they were not added in dihalide form.

2. The catalyst composition of Claim 1 where the nickel compound (B) is nickel halide and the atomic ratios of Mg:Ti, Al:Ti, Ni:Ti, and excess halide:Al are respectively from 5:1 to 200:1, from 0.5:1 to 200:1, from 0.01:1 to 100:1, and from 0.002:1 to 2:1.

3. The catalyst composition of Claim 1 where the nickel compound (B) is nickel chloride, the halide source (D) is an alkyl aluminum chloride, and the atomic ratios of Mg:Ti, Al:Ti, Ni:Ti, and excess chloride:Al are respectively from 5:1 to 75:1, from 1:1 to 75:1, from 1:1 to 40:1, and from 0.01 to 1.4:1.

4. The catalyst composition of Claim 1 where the nickel compound (B) is a hydrocarbon soluble nickel $C_1$—$C_{12}$ carboxylate.

5. The catalyst composition of Claim 1 where the nickel compound (B) is nickel 2-ethylhexanoate or nickel naphthenate and the halide source (D) is ethyl aluminum dichloride.

6. The catalyst composition of Claim 3 where the nickel chloride is formed in situ by reaction of a hydrocarbon soluble nickel $C_6$—$C_{10}$ carboxylate with an active halide source (D).

7. A process for the polymerization of ethylene, $\alpha$-mono-olefins and $\alpha$-diolefins under conditions characteristic of Ziegler polymerization which comprises employing as the polymerization catalyst the composition of any of Claims 1 to 6.

8. The process of Claim 7 where the nickel compound is anhydrous nickel chloride.

9. The process of Claim 7 or 8 where ethylene or a mixture of ethylene and up to 50 per cent by weight based on total monomer of an $\alpha$-olefin or $\alpha$-diolefin or up to 25 per cent by weight based on the polymer of another ethylenically unsaturated monomer is polymerized.

## Patentansprüche

1. Für die Polymerisation von Ethylen, alpha-Monoolefinen und alpha-Diolefinen geeignete Katalysatorzusammensetzung enthaltend das Reaktionsprodukt einer Titanverbindung, einer Organomagnesiumverbindung und eines Halogenids, dadurch gekennzeichnet, daß sie hergestellt worden ist durch Umsetzung von

(A) einer vierwertigen Titanverbindung oder eines Komplexes einer dreiwertigen Titanverbindung mit einem Elektronendonator,

(B) einer wasserfreien zweiwertigen Nickelverbindung,

(C) einer Organomagnesiumkomponente ausgewählt aus (1) einer Organomagnesiumverbindung oder (2) einem Komplex einer Organomagnesiumverbindung und einer anderen Organometallverbindung, wie Bortrialkyle, Alkylsilane, Alkylzinn- und Alkylphosphorverbindungen in einer ausreichenden Menge, um die Organomagnesiumverbindung in einem Kohlenwasserstofflösungsmittel zu solubilisieren,

(D) einer Halogenidquelle, ausgewählt aus (1) einem aktiven nicht-metallischen Halogenid, wobei dieses nicht-metallische Halogenid der Formel R'X entspricht, in der R' Wasserstoff oder eine Kohlenwasserstoffgruppe ist und X Halogen ist, wobei das Halogen des nicht-metallischen Halogenids mindestens so aktiv wie das Halogen von sek.-Butylchlorid ist, oder (2) einem Metallhalogenid ent-

**0 009 160**

sprechend der Formel $MR_{y-a}X_a$, in der M ein Metall der Gruppe 2B, 3A oder 4A des Periodensystems der Elemente von Mendeleev ist, R ein einwertiger organischer Rest ist, X Halogen ist, y eine der Wertigkeit von M entsprechende Zahl ist und a eine Zahl von 1 bis y ist, und

(E) falls die Organomagnesiumkomponente (C) und/oder die Halogenidquelle (D) ungenügende Mengen Aluminium bereitstellen, eine Aluminiumverbindung der Formel Al $Ry'Xy''$, in der R und X die vorstehend definierte Bedeutung haben, die Summe von $y'$ und $y''$ drei ist, wobei die Verhältnisse der Komponenten (A)—(E) derartig sind, daß das Atomverhältnis von Mg:Ti 1:1 bis 2000:1 ist, das Atomverhältnis von Al:Ti 0,01:1 bis 2000:1 ist, das Atomverhältnis von Ni:Ti 0,01:1 bis 500:1 ist, das Atomverhältnis von überschüssigem Halogenid:Al 0,0005:1 bis 10:1 ist, wobei das überschüssige Halogenid der Überschuß ist, der theoretisch erforderlich wäre, um die Magnesium- und die Nickelverbindung in das Dihalogenid umzuwandeln, falls sie nicht in Dihalogenidform zugegeben werden.

2. Katalysatorzusammensetzung nach Anspruch 1, dadurch gekennzeichnet, daß die Nickelverbindung (B) Nickelhalogenid ist und die Atomverhältnisse von Mg:Ti, Al:Ti, Ni:Ti und überschüssiges Halogenid:Al jeweils 5:1 bis 200:1, 0,5:1 bis 200:1, 0,01:1 bis 100:1 und 0,002:1 bis 2:1 sind.

3. Katalysatorzusammensetzung nach Anspruch 1, dadurch gekennzeichnet, daß die Nickelverbindung (B) Nickelchlorid ist, die Halogenidquelle (D) ein Alkylaluminiumchlorid ist und die Atomverhältnisse von Mg:Ti, Al:Ti, Ni:Ti und überschüssiges Chlorid:Al jeweils 5:1 bis 75:1, 1:1 bis 75:1, 1:1 bis 40:1 und 0,01 bis 1,4:1 sind.

4. Katalysatorzusammensetzung nach Anspruch 1, dadurch gekennzeichnet, daß die Nickelverbindung (B) ein in Kohlenwasserstoffen lösliches Nickel-$C_1$—$C_{12}$-carboxylat ist.

5. Katalysatorzusammensetzung nach Anspruch 1, dadurch gekennzeichnet, daß die Nickelverbindung (B) das Nickel-2-ethylhexanoat oder das Nickelnaphthenat ist und die Halogenidquelle (D) das Ethylaluminiumdichlorid ist.

6. Katalystorzusammensetzung nach Anspruch 3, dadurch gekennzeichnet, daß das Nickelchlorid in situ durch Umsetzung eines in Kohlenwasserstoff löslichen Nickel-$C_6$—$C_{10}$-Carboxylats mit einer aktiven Halogenidquelle (B) hergestellt worden ist.

7. Verfahren zum Polymerisieren von Ethylen, alpha-Monoolefinen und alpha-Diolefinen unter charakteristischen Bedingungen für die Ziegler-Polymerisation, dadurch gekennzeichnet, daß als Polymerisationskatalysator die Zusammensetzungen nach einem der Ansprüche 1 bis 6 verwendet wird.

8. Verfahren nach Anspruch 7, dadurch gekennzeichnet daß die Nickelverbindung wasserfreies Nickelchlorid ist.

9. Verfahren nach Anspruch 7 oder 8, dadurch gekennzeichnet, daß Ethylen oder eine Mischung von Ethylen und bis zu 50 Gew.%, bezogen auf das Gesamtgewicht des Monomeren, eines alpha-Olefins oder alpha-Diolefins oder bis zu 25 Gew.%, bezogen auf das Polymere, eines anderen ethylenisch ungesättigten Monomeren polymerisiert werden.


## Revendications

1. Composition catalytique appropriée pour la polymérisation de l'éthylène, des $\alpha$-mono-oléfines et des $\alpha$-dioléfines contenant le produit de réaction d'un composé du titane, d'un composé organomagnésien et d'un hélogénure et caractérisé par le fait qu'il est préparé en faisant réagir:

(A) un composé de titane tétravalent ou un complexe d'un composé de titane trivalent avec un donneur d'électrons,

(B) un composé de nickel divalent anhydre,

(C) un composé organomagnésien choisi parmi (1) un composé organomagnésien ou (2) un complexe d'un composé organomagnésien et d'un autre composé organométallique tel que des composés boro-trialkyle, des alkyl-silanes, des alkyl-étain et des composés alkyl-phosphore en une quantité suffisante pour solubiliser le composé organomagnésien dans un solvant hydrocarboné.

(D) une source d'halogénure choisie parmi (1) un halogénure non métallique actif, cet halogénure non-métallique correspondant à la formule R'X dans laquelle R' est de l'hydrogène ou un groupe hydrocarbyle et X est un halogène, et l'halogène de l'halogénure non-métallique étant au moins aussi actif que l'halogène du chlorure de sec-butyle ou (2) un halogénure métallique correspondant à la formule $MR_{y-a}X_a$ dans laquelle M est un métal du groupe 2B, 3A ou 4A de la Table périodique des éléments de Mendeleev, R est un radical organique monovalent, X est un halogène, y est un nombre correspondant à la valence de M et a est un nombre de 1 à y, et,

(E) si le composé organomagnesien (C) et/ou la source d'halogénure (D) fournissent des quantités insuffisantes d'aluminium, un composé d'aluminium représenté par la formule Al $Ry'Xy''$ dans laquelle R et X sont tels que définis ci-dessus, et la somme de $y'$ et $y''$ étant trois; à condition que les proportions des constituants (A)—(E) soient telles que le rapport atomique de Mg:Ti, soit 1:1 à 2000:1, le rapport atomique de Al:Ti soit 0,01:1 à 2000:1, le rapport atomique de Ni:Ti soit 0,01:1 à 500:1, le rapport atomique de excès d'halogénure:Al soit 0,0005:1 à 10:1, étant donné que l'excès d'halogénure est l'excès qui serait théoriquement nécessaire pour transformer le composé de magnésium et le composé de nickel en le dihalogénure s'ils n'étaient pas ajoutés sous la forme dihalogénure.

2. Composition catalytique selon la revendication 1, où le composé de nickel (B) est un

13

halogénure de nickel et où les rapports atomiques de Mg:Ti, Al:Ti, Ni:Ti et excès d'halogénure:Al sont respectivement 5:1 à 200:1, 0,5:1 à 200:1, 0,01 à 100:1 et 0,002:1 à 2:1.

3. Composition catalytique selon la revendication 1, où le composé de nickel (B) est le chlorure de nickel, la source d'halogénure (D) est un chlorure d'alkyl-aluminium et où les rapports atomiques Mg:Ti, Al:Ti, Ni:Ti, et excès d'halogénure:Al sont respectivement 5:1 à 75:1, 1:1 à 75:1, 1:1 à 40:1, et 0,01:1 à 1,4:1.

4. Composition catalytique selon la revendication 1, où le composé de nickel (B) est un $C_1$—$C_{12}$ carboxylate de nickel soluble dans les hydrocarbures.

5. Composition catalytique selon la revendication 1, où le composé de nickel (B) est le 2-éthyl-hexanoate de nickel ou le naphténate de nickel et où la source d'halogénure (D) est le dichlorure d'éthyl-aluminium.

6. Composition catalytique selon la revendication 3, où le chlorure de nickel est formé in-situ par la réaction d'un $C_6$—$C_{10}$ carboxylate de nickel soluble dans les hydrocarbures avec une source d'halogénure actif (D).

7. Procédé de polymérisation de l'éthylène, des $\alpha$-mono-oléfines et des $\alpha$-dioléfines dans les conditions caractéristiques de la polymérisation Ziegler qui consiste à utiliser comme catalyseur de polymérisation la composition de l'une quelconque des revendications 1 à 6.

8. Procédé selon la revendication 7, où le composé de nickel est le chlorure de nickel anhydre.

9. Procédé selon les revendications 7 ou 8, où l'éthylène ou bien un mélange d'éthylène et jusqu'à 50% en poids par rapport au monomère total d'$\alpha$-oléfine ou d'$\alpha$-dioléfine, ou jusqu'à 25% en poids par rapport au polymère d'un autre monomère éthyléniquement insaturé, sont polymérisés.